## Europäisches Patentamt
### European Patent Office
### Office européen des brevets

(19)

(11) Veröffentlichungsnummer: **0 007 988**
**B1**

(12) # EUROPÄISCHE PATENTSCHRIFT

(45) Veröffentlichungstag der Patentschrift:
**20.01.82**

(21) Anmeldenummer: **79101971.4**

(22) Anmeldetag: **15.06.79**

(51) Int. Cl.³: **B 65 G 65/23,** F 27 B 9/30

(54) Vorrichtung zum Auskippen von in einem Chargenbehälter enthaltenem Wärmebehandlungsgut.

(30) Priorität: **16.08.78 DE 2835810**

(43) Veröffentlichungstag der Anmeldung:
**20.02.80 Patentblatt 80/4**

(45) Bekanntmachung des Hinweises auf die Patenterteilung:
**20.01.82 Patentblatt 82/3**

(84) Benannte Vertragsstaaten:
**AT CH FR GB**

(56) Entgegenhaltungen:
**DE-B-1 222 954**
**DE-C-725 787**
**DL-A-60 198**

(73) Patentinhaber: **BROWN, BOVERI & CIE**
**Aktiengesellschaft Mannheim, Kallstadter Strasse 1,**
**D-6800 Mannheim Käfertal (DE)**

(72) Erfinder: **Gillhaus, Horst, Ing.-Grad., Niederhofer**
**Kohlenweg 49, D-4600 Dortmund (DE)**

ACTORUM AG.

Vorrichtung zum Auskippen von in einem Chargenbehälter enthaltenem
Wärmebehandlungsgut

Die Erfindung betrifft eine Vorrichtung zum Auskippen von in einem Chargenbehälter enthaltenem, in einem Wärmebehandlungsofen behandeltem Wärmebehandlungsgut in ein Abschreckbad, mit einer Einrichtung zum Kippen des Chargenbehälters.

In Wärmebehandlungsöfen zum Gasaufkohlen, Nitrieren, Karbonitrieren oder Blankhärten wird das zu behandelnde Gut mit Hilfe von Rosten, wenn es sich um Einzelstücke grosser Abmessungen handelt, oder in Schalen bzw. Körben, wenn es sich um Einzelstücke kleiner Abmessungen handelt, durch den Ofen transportiert. Sollten die Teile anschliessend abgeschreckt werden, so kann man die beladenen Roste, Schalen oder Körbe insgesamt in das Abschreckbad eintauchen. Insbesondere dann, wenn das Abschrecken in Wasser erfolgt, ist die Temperaturänderung für die Transportmittel so schroff, dass deren Haltbarkeit gering ist und die Wirtschaftlichkeit gefährdet.

Es ist deshalb auch schon bekannt, die Chargenbehälter über dem Abschreckbad zu kippen, so dass nur die erhitzten Teile des wärmebehandelnden Gutes in das Abschreckbad fallen. Bei den hohen Temperaturen von bis 1000 °C, auf die das zu behandelnde Gut aufgeheizt wird, neigen bei Schüttgut die einzelnen Teile zum Verkleben untereinander und mit dem Chargenbehälter. Um eine völlige Entleerung zu gewährleisten, werden bei einem bekannten Wärmebehandlungsofen die Schubschalen, die das Wärmebehandlungsgut durch den Ofen transportieren, über einen Anschlag um ca. 150° gedreht und mit einer Schalenrütteleinrichtung gerüttelt.

Der vorligenden Erfindung liegt die Aufgabe zugrunde, eine Vorrichtung der eingangs genannten Art dahingehend zu verbessern, dass ein völliges Entleeren des Chargenbehälters auch ohne Rütteleinrichtung gewährleistet ist, dass der Chargenbehälter in gewünschter, vorher bestimmbarer Geschwindigkeit geleert werden kann, dass der Chargenbehälter nicht ins Abschreckbad eintaucht, und dass sie in allen Arten von Wärmebehandlungsöfen universell einsetzbar ist.

Diese Aufgabe wird dadurch gelöst, dass die Kippeinrichtung einen Kipptisch umfasst, der über Seitenhalter und Lagerzapfen bzw. Antriebszapfen drehbar an den Ofenwänden gelagert ist, dass der Antriebszapfen mit einer ausserhalb des Ofens angeordneten Drehvorrichtung verbunden ist, dass am Kipptisch parallel zur Einschubrichtung des Behälters verlaufende seitliche Führungsleisten für den Behälter vorgesehen sind, zwischen denen eine Anzahl von Rollen gelagert sind, die das Plateau bilden, auf dem der Chargenbehälter verschoben wird, dass an den Führungsleisten seitlich innen Nocken vorgesehen sind, die in entsprechende Nuten des Chargenbehälters eingreifen und im gekippten Zustand den Chargenbehälter festhalten, und dass eine Klinke vorgesehen ist, die in den Boden des Chargenbehälters einrastet, sobald der Kipptisch seine Grundstellung verlässt.

Damit ergeben sich die Vorteile, dass die Kippvorrichtung mit aufgesetztem Chargenbehälter um mindestens 180° kippbar ist, dass das Abkippen in gewünschter Weise langsam, schnell oder ruckweise erfolgen kann, dass der Chargenbehälter nicht ins Abschreckbad eintaucht, dass die Kippvorrichtung einfach und billig herzustellen und einzubauen ist, und dass selbst bei einem nachträglichen Einbau die übrigen Funktionen des Ofens nicht beeinträchtigt werden. Auch kann das Abkippen räumlich und zeitlich unabhängig von der Beschickung des Ofenraumes erfolgen, so dass ein Vordringen der aus dem Abschreckbad aufsteigenden Dämpfe in den Ofenraum durch Abschottungen verhindert werden kann.

Weitere Ausgestaltungen der Erfindung sowie ihre Vorteile ergeben sich aus den Unteransprüchen in Verbindung mit der nachfolgenden Beschreibung eines Ausführungsbeispiels.

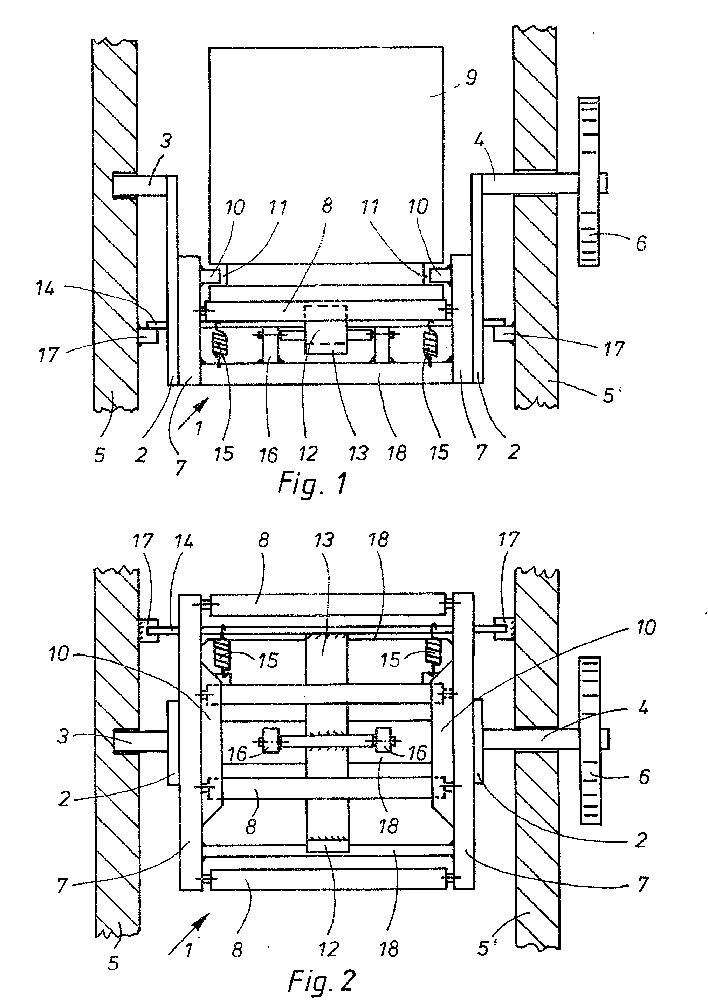

Fig. 1 zeigt eine Kippvorrichtung in Vorderansicht.

Fig. 2 zeigt die Kippvorrichtung in Draufsicht.

Der Kipptisch besteht im wesentlichen aus zwei seitlichen Führungsleisten 7, die über waagrechte Träger 18 miteinander verbunden sind. An den seitlichen Führungsleisten 7 sind die Seitenhalter 2 befestigt. Am linken Seitenhalter 2 ist ein Drehzapfen 3 angeschweisst, der an der Ofenwand 5 gelagert ist. Am rechten Seitenhalter 2 ist ein Drehzapfen 4 angeschweisst, der durch eine Schleusenwand 5' hindurchgeht und an der Aussenseite des Ofens eine Drehvorrichtung 6 trägt. Die Drehvorrichtung 6 kann ein Handrad sein, ein Zahnrad oder auch ein hydraulischer Antrieb.

In den beiden seitlichen Führungsleisten 7 ist eine Anzahl von Rollen 8 gelagert, auf denen ein Chargenbehälter 9 in die Kipp-Position geschoben werden kann. Prinzipiell wären auch Schubleisten statt der Rollen einsetzbar, doch haben Rollen einen wesentlich geringeren Reibungswiderstand, was den Transport der Chargenbehälter 9 erleichtert. An den Führungsleisten 7 sind seitlich innen Nocken 10 vorgesehen, die in entsprechende Nuten 11 am Chargenbehälter 9 eingreifen und ein Abkippen des Chargenbehälters 9 verhindern.

Um zu verhindern, dass der Chargenbehälter 9 beim Kippen des Kipptisches 1 auf den Rollen 8 wegrollt, ist eine Klinke 12 vorgesehen, die in den Boden des Chargenbehälters 9 einrastet, sobald der Kipptisch 1 seine Grundstellung verlässt. Zu diesem Zweck ist die Klinke 12 über einen Hebel 13 in einem Lager 16 drehbar gelagert. An dem der Klinke 12 entgegengesetzten Ende des Hebels 13 ist eine Anschlagstange 14 befestigt, die über die seitliche Begrenzung des Kipptisches 1 hinausragt und in Grundstellung des Kipptisches 1 auch an der Schleusenwand 5' befestigten festen Anschlägen 17 aufliegt, wodurch die Klinke 12 ausser Eingriff mit dem Chargenbehälter 9 gebracht wird. Sobald der Kipptisch 1 seine Grundstellung verlässt, wird die Klinke 12 durch Spiralfedern 15 in Eingriff mit dem Boden des Chargenbehälters 9 gebracht.

In Grundstellung steht der Kipptisch 1 in waagrechter Position, so dass der Chargenbehälter 9 von der Wärmebehandlungsstation des Ofens kommend auf ihn geschoben werden kann. Die seitlichen Führungsleisten 7 sind so nach oben verlängert, dass der Chargenbehälter 9 seine Richtung beim Transport beibehält. Die Klinke 12, der Hebel 13, die Anschlagstange 14, die Federn 15 sowie das Hebellager 16 sind unterhalb des von der Oberseite der Rollen 8 gebildeten Kipptisch-Plateaus angeordnet, dass der Chargenbehälter 9 in Grundstelluung, d.h. in waagrechter Position des Kipptisches von der Erwärmungsposition des Ofens kommend frei beweglich auf ihn geschoben werden kann. Die seitlichen Führungsleisten 7 sind so weit nach oben verlängert, dass der Chargenbehälter 9 seine Richtung beim Transport beibehält. Die in das Abschreckbad abgekippten Teile können mit Hilfe eines Auffangkorbes chargenweise oder über ein schräges Förderband kontinuierlich aus dem Bad geholt werden.

## Patentansprüche

1. Vorrichtung zum Auskippen von in einem Chargenbehälter (9) enthaltenen, in einem Wärmebehandlungsofen behandelten Wärmebehandlungsgut in ein Abschreckbad, mit einer Einrichtung (6) zum Kippen des Chargenbehälters (9), dadurch gekennzeichnet, dass die Kippeinrichtung einen Kipptisch (1) umfasst, der über Seitenhalter (2) und Lagerzapfen (3) bzw. Antriebszapfen (4) drehbar an den Ofenwänden (5, 5') gelagert ist, dass der Antriebszapfen (4) mit einer ausserhalb des Ofens angeordneten Drehvorrichtung (6) verbunden ist, dass am Kipptisch (1) parallel zur Einschubrichtung des Behälters (9) verlaufende seitliche Führungsleisten (7) für den Behälter vorgesehen sind, zwischen denen eine Anzahl von Rollen (8) gelagert sind, die das Plateau bilden, auf dem der Chargenbehälter (9) verschoben wird, dass an den Führungsleisten (7) seitlich innen Nocken (10) vorgesehen sind, die in entsprechende Nuten (11) des Chargenbehälters (9) eingreifen und im gekippten Zustand den Chargenbehälter (9) festhalten, und dass eine Klinke (12) vorgesehen ist, die in den Boden des Chargenbehälters (9) einrastet, sobald der Kipptisch (1) seine Grundstellung verlässt.

2. Vorrichtung nach Anspruch 1, dadurch gekennzeichnet, dass die Klinke (12) an einem Ende eines doppelarmigen, am Kipptisch (1) drehbar gelagerten Hebels (13) angeordnet ist, dessen anderes Ende als Anschlagstange (14) dient, die in Grundstellung des Kipptisches (1) auf im Ofen befestigten Anschlägen (17) derart aufliegt, dass die Klinke (12) ausser Eingriff gebracht ist und dass Federn (15) vorgesehen sind, die die Klinke (12) zum Einrasten in den Boden des Chargenbehälters (9) bringen.

3. Vorrichtung nach Anspruch 1 oder 2, dadurch gekennzeichnet, dass die Klinke (12) mit Hebel (13), Lager (16), Federn (15) und Anschlagstange (14) unter dem von den Rollen (8) gebildeten Plateau des Kipptisches (1) angeordnet sind.

## Claims

1. Device for tipping out heat treatment material, which is contained in a charge container (9) and treated in a heat treatment furnace, into a quenching bath, with a device (6) for tilting the charge container (9), characterized in that the tilting device comprises a tilting table (1) which is rotatably mounted on the furnace walls (5, 5') via lateral supports (2) and support bearings (3) and a drive journal (4) respectively; in that the drive journal (4) is connected to a rotating device (6) which is disposed outside the furnace; in that on the tilting table (1) there are provided lateral guide rails (7) for the container which extend parallel to the charging direction of the container (9) and between which a number of rollers (8) are mounted forming the surface on which the charge container (9) ist displaced; in that on the guide rails (7) cams (10) are provided laterally on the inside which engage in corresponding grooves (11) of the charge container (9) and retain the charge container (9) in the tilted state; and in that a catch (12) is provided which engages in the base of the charge container (9) as soon as the tilting table (1) leaves its normal position.

2. Device according to claim 1, characterized in that the catch (12) is disposed at one end of a double-armed lever (13) which is rotatably mounted on the tilting table (1), the other end of the lever (13) acting as a stop bar (14) which in the normal position of the tilting table (1) rests upon stops (17) in the furnace in such a manner that the catch (12) is disengaged and that springs (15) are provided which bring the catch (12) to éngage in the base of the charge container (9).

3. Device according to claim 1 or 2, characterized in that the catch (12) with the lever (13), bearing (16), springs (15) and stop bar (14) are disposed below the surface – of the tilting table (1) – formed by the rollers (8).

## Revendications

1. Dispositif pour décharger par basculement un produit soumis à un traitement thermique, contenu dans un récipient (9) contenant la charge traitée dans un four de traitement thermique, dans un bain de trempe, comportant un dispositif (6) pour faire basculer le récipient (9) contenant la charge, caractérisé en ce que le dispositif de basculement comporte une table basculante (1) qui est montée par l'intermédiaire de supports latéraux (2) et de volets formant paliers (3) ou de pivots d'entraînement (4) de façon à pouvoir pivoter sur les parois du four (5, 5'), en ce que le pivot d'entraînement (4) est relié à un dispositif d'entraînement de rotation (6) disposé à l'extérieur du four, en ce que sur la table basculante (1), il est prévu pour le récipient des barres latérales de guidage (7) s'étendant parallèlement à la direction d'introduction du récipient (9) et entre lesquelles sont montés un certain nombre de rouleaux (8) qui forment le plateau sur lequel le récipient (9) contenant la charge est déplacé, en ce que sur les barres de guidage (7) sont prévus latéralement et intérieurement des appendices saillants (10) qui s'engagent dans les rainures correspondantes (11) du récipient (9) recevant la charge et, à l'état basculé, maintiennent le récipient (9) contenant la charge, et en ce qu'il est prévu un cliquet (12) qui s'encliquette dans le fond du récipient (9) recevant la charge dès que la table basculante (1) quitte sa position de base.

2. Dispositif selon la revendication 1, caractérisé en ce que le cliquet (12) est disposé sur une extrémité d'un levier (13) à deux bras, monté de façon à pouvoir pivoter sur la table basculante (1) et dont l'autre extrémité sert de barre de butée (14) qui, dans la position de base de la table basculante (1), repose sur des butées (17) fixées dans le four, de telle manière que le cliquet (12) est amené hors de prise, et qu'il est prévu des ressorts (15) qui amènent le cliquet (12) à s'encliqueter dans le fond du récipient (9) contenant la charge.

3. Dispositif selon la revendication 1 ou 2, caractérisé en ce que le cliquet (12) muni du levier (13), les paliers (16), les ressorts (15) et la barre de butée (14) sont disposés au-dessous du plateau de la table basculante (1), constitué par les rouleaux (8).

Fig. 1

Fig. 2